# EUROPEAN PATENT APPLICATION

(11) **EP 4 718 203 A1**
(43) Date of publication of application: **01.04.2026**
(21) Application number: 25191224.2
(22) Date of filing: 23.07.2025
(51) Int. Cl.: G06F 1/06, G06F 13/16

(54) **MEMORY WITH MULTI FREQUENCY CHANNELS**

(30) Priority: 26.09.2024 US 202418898238
(71) Applicant: INTEL Corporation, Santa Clara, CA 95054 (US)
(72) Inventor: LEDDIGE, Michael, Middleton, 83644 (US); MARTIN, Aaron, El Dorado Hills, 95762 (US); MCCALL, James A., Portland, 97229 (US); MENDEZ-RUIZ, Cesar, 45070 Zapopan (MX); SMITH, Zackery, Vernonia, 97064 (US)
(74) Representative: Viering, Jentschura & Partner mbB Patent- und Rechtsanwälte

(57) **Abstract**

Disclosed are processing apparatuses and methods with a plurality of memory channels that operate at different frequency values to spread EMI emissions over a wider frequency range. The channels may or may not also employ spread spectrum clocking (SSC).

## Description

### TECHNICAL FIELD

Embodiments of the invention relate to the field of integrated circuits; and more specifically, to the field of memory channel operation.

### BRIEF DESCRIPTION OF THE DRAWINGS

The disclosure may best be understood by referring to the following description and accompanying drawings that are used to illustrate embodiments of the invention. In the drawings:
Fig. 1A is a block diagram showing memory channels used with a conventional processor system.
Fig. 1B is a diagram conceptually illustrating an EMI (electro magnetic interference) power envelope for the memory of Fig. 1A.
Fig. 2A is a block diagram showing a processing system with memory channel groups in accordance with some embodiments.
Fig. 2B is a diagram conceptually illustrating EMI power responses for the processor apparatus of Fig. 2A in accordance with some embodiments.
Fig. 3 is a diagram showing EMI vs. number of channels curves for four different examples in accordance with some embodiments.
Fig. 4 is a block diagram of a memory controller with multiple channel groups in accordance with some embodiments.
Fig. 5 is a diagram showing a clock generation circuit in accordance with some embodiments.
Fig. 6 is a flow diagram showing a routine 600 for making a multi frequency (MF) memory product in accordance with some embodiments.
Fig. 7 is a diagram showing a processing system in accordance with some embodiments.

### DETAILED DESCRIPTION

Processor apparatuses such as server processor integrated circuit (IC) packages are undergoing a rapid growth in the number of memory channels supported from each apparatus, e.g., increasing from 8 channels of memory on current designs to 12, 16 and higher numbers of channels in products to be rolled out in the next several years. This applies to many different types of processor systems such as compute, graphics and AI (artificial intelligence) processor systems. For example, with AI-centric processors, bandwidth demands are calling for solutions up to and beyond 80 separate memory channels such as LPDDR5 (Low-Power Double Data Rate 5^{th} Gen.). However, it has been observed that for every doubling of channels, the emitted electromagnetic interference (EMI) levels for the processor increase by 6 dB. With many processors already being within 5 dB of existing limits, this is problematic since it is unlikely that existing EMI standards will be increased.

There are several different approaches currently used to reduce problematic EMI emissions. For example, with some devices, structures may be used at a chassis level to block emissions. These structures include EMI shielding materials and honeycomb air ventilation assemblies. Unfortunately, while they can be effective, these approaches tend to be expensive and are typically used when alternatives are insufficient to bring a product into EMI compliance.

Another approach is spread Spectrum Clocking (SSC). With SSC, the fundamental clock frequency used for driving the memory lane data is dithered, e.g., modulated with a 32 kHz frequency, to spread the radiated energy, in this case, over a 32 KHz band around the fundamental frequency. The SSC modulation is slow enough that utilized phase locked loops (PLLs) can remain locked but enough to spread the emitted power over a wider bandwidth, lowering EMI peak values and allowing devices to satisfy EMI regulations, which generally place limits on peak emissions within certain specified bands. While SSC can effectively reduce emissions for different components operating at different frequencies, emissions from multiple components operating at the same frequency can be problematic. Even with SSC, they can add to the overall emission peaks when enough components are running at frequencies that are close to one another.

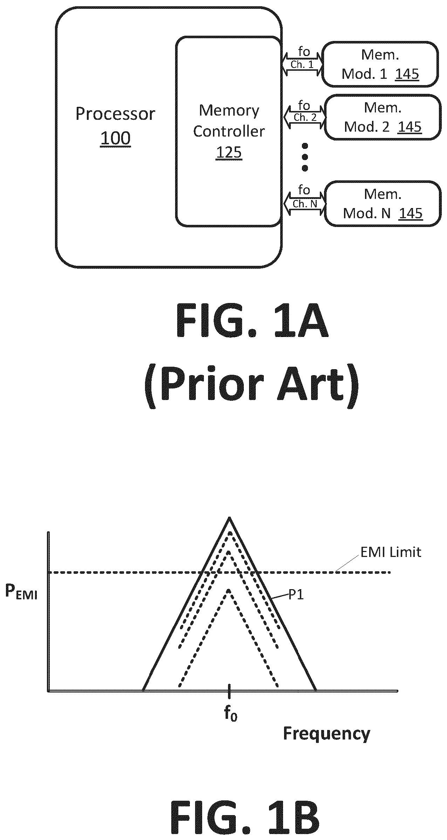

Fig. 1A is a block diagram showing memory channels used with a conventional processor system. There is a processor with a memory controller 125 that is coupled to N memory modules 145 through channels 1-N as is shown. The memory modules 145 each comprise dynamic random access memory (DRAM) chips, along with control and power delivery circuitry for powering and accessing the DRAM chips. The channels are driven with the same fundamental frequency (fo). This results that the emissions from each channel adding up together to create a higher EMI level at the fundamental frequency than from one channel alone. This is conceptually illustrated in the diagram of Fig. 1B. The individual power envelopes (indicated with the dashed lines) are all centered at the fundamental frequency (Fo) and thus, they add together, generating the overall power envelope P1, which exceeds the allowed peak EMI limit. Accordingly, new approaches would be desired.

In some embodiments, rather than having all of the channels operating at the same frequency, they are clocked at two or more different frequencies with enough separation to comply with test band requirements but close enough to achieve acceptable operational performance. In some embodiments, they may be placed into separate channel groups that operate at different frequencies so that their emissions will not excessively add together. This can result in allowing for additional channels or having more regulatory margin that may be used by other components in a platform.

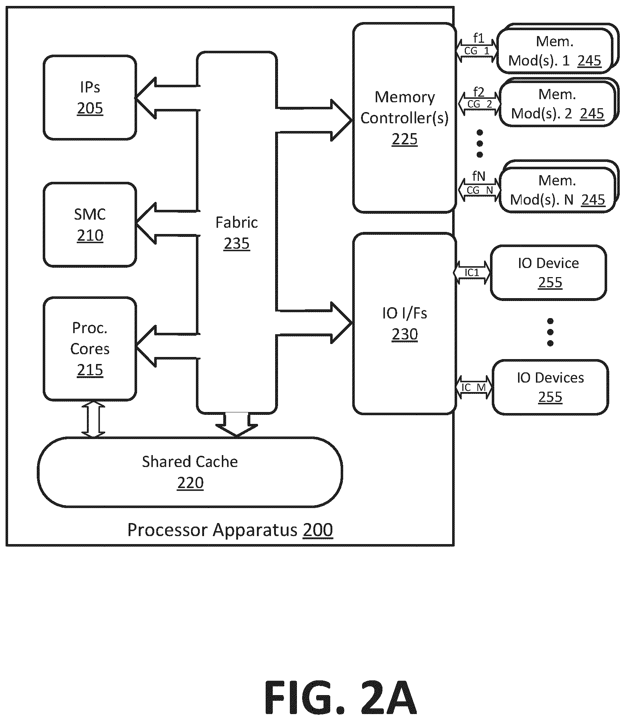

Fig. 2A is a block diagram showing a processing system with memory channel groups in accordance with some embodiments. The processor 200 includes IP (intellectual property) circuits 205, a system management controller (SMC) 210, processing cores 215, shared cash circuitry 220, a memory controller 225, IO interface circuits 230, and system fabric 235, all coupled together as shown. Also included are memory modules 245 coupled to the memory controller(s) 225 through channels in channel groups CG _1-CG_N. Similarly, there are IO devices 2:55 that are coupled to the I/O interface circuits 250.

The processor apparatus 200 comprises at least one hardware circuit configured to execute instructions (e.g., in processor cores 215) contained in program code. The hardware circuit may be implemented with one or more integrated circuits. Examples of processor types that may be implemented in processor 200 include, but are not limited to, a central processing unit (CPU), an array processor, a vector processor, a digital signal processor (DSP), a field-programmable gate array (FPGA), an application specific integrated circuit (ASIC), a graphics processing unit (GPU), an artificial intelligence processing unit (AIPU), and so forth. It should be appreciated that the processor 200 may be implemented in various different manners. For example, it may be implemented on a single die, multiple dies (dielets, chiplets), one or more dies in a common package, or one or more dies in multiple packages. Along these lines, some of the depicted blocks may be located separately on different dies or together on two or more different dies.

The IP circuits 205 are circuits that perform a particular function. An IP circuit (or IP) may be a unit of logic, circuit, cell, or chip layout that is reusable. A few examples of IP circuits include processor cores, memories, caches, floating point processors, memory controllers, bus controllers, graphics processors, transceivers, network interface controllers, and display controllers. One or more portions of a larger IP can themselves be designated as IP circuits. For example, an instruction execution unit and cache controller may be IP for a processor IP.

The SMC 210 includes one or more microcontrollers, state machines and/or other logic circuits for controlling various aspects of the processor 200. For example, it may manage functions such as security, boot configuration, and power and performance including utilized and allocated power along with thermal management. The SMC may also be referred to as a P-unit, a power management unit (PMU), a power control unit (PCU), a system management unit (SMU) and the like and may include multiple SMCs, PMUs, die management controllers, etc. In some embodiments, the SMC may be used to configure operating parameters for the memory controller(s) 225 such as operating frequencies for the different channel groups, e.g., through boot procedures.

The processing cores 215 comprise cores for executing code in accordance with desired functionality for the processor 200. They may comprise any suitable combination of core types such as compute, graphics, array, vector, etc. and may be implemented with differently sized instances and/or using the same or different instruction set architectures. Specific implementations will depend on functionality, as well as power and performance objectives.

The shared cache 220 includes one or more levels of cache memory, typically random access memory (RAM) that is used by the other blocks in the processor including the processor cores 215. Some or all of it may be part of an overall memory system that also includes the memory modules 245. The IO devices 255 and their associated IO interfaces 230 are coupled with the Processor 200 to provide additional functionality and/or better performance capabilities. For example, they may include IO interface devices such as PCIe (Peripheral chip Interconnect express), USB (Universal Serial Bus) and/or CXL (Compute Express Link) interfaces for peripheral user interface devices, displays, accelerators, and the like.

The fabric 235 is a communications network of interconnected nodes to couple to one another the various different blocks of the processor 200. In some embodiments, it facilitates high-speed data transfer and communication, which allows for the creation of unified computing systems where the different components can work together. For convenience, a single overall fabric is shown, but fabric 235 may comprise multiple different fabrics and interconnection structures such as mesh and ring networks, as well as busses and point-to-point connections. In some embodiments, it may include separate different fabrics, e.g., a main data fabric for transferring data between the blocks and a control fabric for setting parameters, reading operational states, managing operating modes, communicating telemetry, and the like.

The memory controller(s) 225 is coupled to the memory modules 245 through a plurality of different channels, which are combined into the different channel groups (CG_1-CG_N). The memory modules are made up of DRAM memory chips, and each module may include a power delivery circuit and a memory module controller to interface between the raw memory and the memory controller 225. The memory may be implemented using any suitable type such as DDR double data rate), LPDDR (Low Power DDR), and the like. Accordingly, the channels that make up the channel groups operate in conformance with whatever memory type is being implemented.

The channel groups each include one or more memory channels. For example, with a DDR implementation, each channel may include 40 separate lanes including 32 data and 8 ECC (error correction coded) bi-directional single-ended lanes. There are also control lanes and a differential clock that is provided by the memory controller 225 to the memory modules 245. Each of the channel groups are clocked at different clock frequencies. For example, channel group 1 is clocked at f₁, channel group 2 channels are clocked at f₂, and so on.

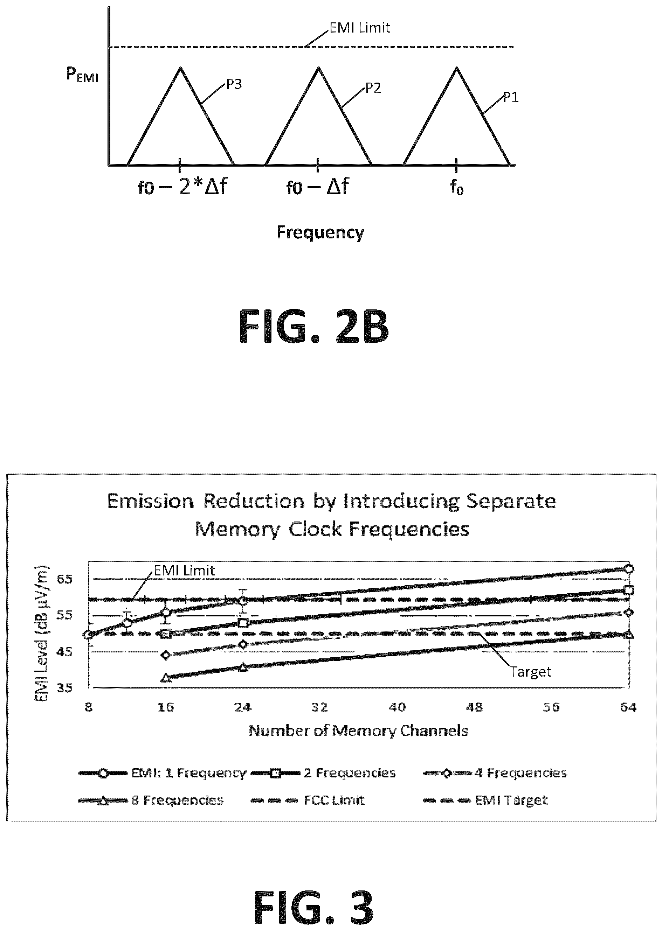

Fig. 2B is a diagram showing power envelope components for a processor with three memory channel groups. In some embodiments, the channel group 1 frequency (f₁) is the highest frequency as compared with those for the other two channel groups, which are clocked at frequency levels that progress downward by an amount Δf for each next group. In this way, the EMI that is generated by the different channel groups is spread across a wider spectrum and not focused at a fundamental frequency (f₁ in this case). As can be seen, by spreading out the memory channel frequencies, no individual EMI power component goes above the EMI limit.

Fig. 3 is a diagram showing EMI vs. number of channels curves for four different examples, each with a different number of operating frequencies. As can be seen, the measured peak EMI goes down as the number of different operating frequencies goes up. With this example, 8 channels at the same frequency pass emissions at 50 dBm/uV, but 16 channels or more would either violate the limits or be too close for many design specifications. On the other hand, a 16 channel implementation having as low as two different frequency groups of 8 channels in each group would lower the emissions level by 6 dB, providing more acceptable margins and maintaining a 50 dBm/uV level. In some embodiments, a selectable configuration may be provided. By providing adjustable clock settings, emission levels can be tuned to meet regulatory limits, even with increasing bandwidth and channel count requirements. As the demand for channels per processors grow, the emissions can be controlled without having to incorporate costly shielding structures.

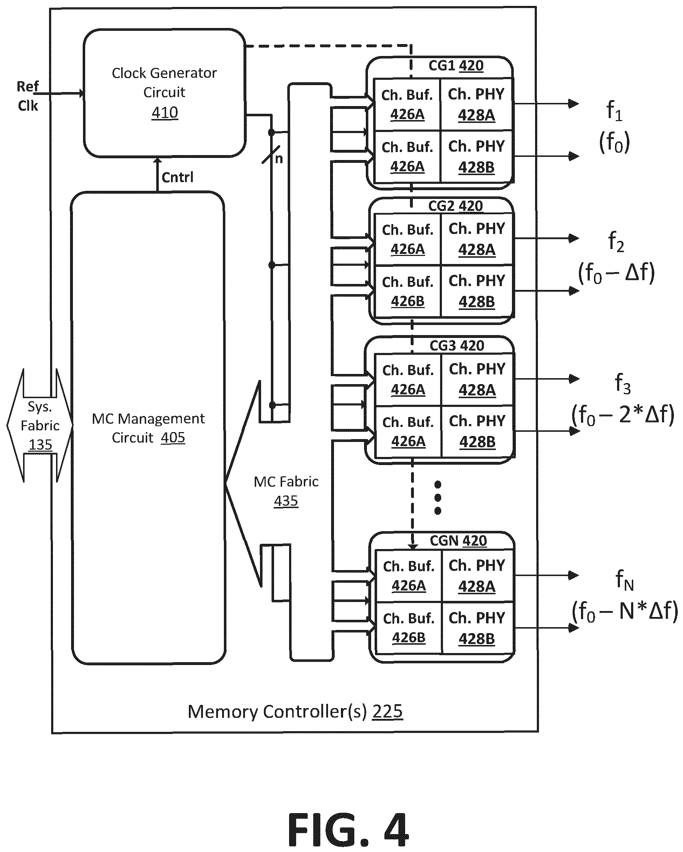

Fig. 4 is a block diagram of a memory controller 225 with multiple channel groups in accordance with some embodiments. For simplicity, and ease of description, one memory controller is shown, but it should be appreciated that multiple separate memory controllers may be used to service a plurality of separate memory channels. They may be coupled together in any suitable way, e.g., in a hierarchal manner or in parallel, depending on design considerations.

The depicted memory controller(s) (referred to simply as memory controller hereafter) includes memory controller management circuit 405, clock generator circuit 410, and channel group circuits 420 coupled together as shown, e.g., through MC fabric 435. The channel groups 420 include channel circuits that each include channel buffer circuits 426 and channel PHY circuits 428. With this example, each channel group has two channels (A, B) but in other embodiments, a channel group may have any number of channels including 1, 2, 4, 8, 12, 16, 24, or more. The channel circuits in each group are clocked at a frequency that is used for their associated channel group. For example, the channel circuits in group 1 are clocked at f₁, and the channel circuits in group 2 are clocked at a frequency f₂.

As shown in the figure, on one side, the memory controller is coupled to a system fabric 135 and on the other side, to memory modules (not shown) through the depicted channel group channel circuits. The memory controller takes read and write requests from the system fabric, and on the other side, it interacts with memory devices (e.g., DRAM DIMMs) through the channel PHY circuits 428.

The buffer circuits 426 include RAM memory such as FIFO (first-in-first-out) memory blocks. In some embodiments, each channel may have a buffer for receiving data and one for sending data to the memory to associated memory modules. The buffers are coupled to controllable clock generators, e.g., from clock generator circuit 410, to control a rate at which the data is received/sent. Since the channel groups operate at different frequencies (f₁, f₂, etc.), the buffers should be controlled to sufficiently synchronize the data from the different channel groups without incurring unreasonable under or over flows. In some embodiments, they may be clocked at the lowest operating channel frequency, e.g., f_{N} with this example.

The channel PHY circuits 428 include transceivers (not shown) to send and receive data over the lanes in their associated channel. They are coupled to the clock generator circuit 410 to receive a clock having a frequency corresponding to the frequency for their associated channel group. They also may include logic, as well as their own buffer circuitry, to send and receive data in an appropriate format and alignment. For example, with DDR memory, they may convert parallel single-rate data from the memory controller into serial dual-rate data streams for transmission over each lane in their memory channel and vice versa.

The MC management circuit 405 controls calibration and initialization of the memory modules, as well as managing accesses and request queues to efficiently coordinate utilization over the various different channels. Moreover, it may translate memory addresses generated by the processor into physical addresses that can be accessed by the memory modules. This process involves decoding the address and selecting the appropriate memory module. The MC management circuit manages the flow of data between the memory and the processor. To do this, it controls the timing and sequencing of data transfers, ensuring that data is written to and retrieved from the memory modules accurately and efficiently.

In some embodiments, the MC management circuit may also control the operating frequencies of the channel groups 420. To do this, it controls the clock generation circuit 410, which has multiple outputs with different frequency clocks for the different channel groups. The clock outputs are coupled to the channel groups and channel circuits through a clock distribution network to provide them with sufficiently precise and aligned clock signals for transceiving data. In some embodiments, the frequencies may be fixed and in other implementations, they may be programmed, e.g., burned-in at a factory or set at initialization or even dynamically during operation.

The MC management circuit 405 may also control spread spectrum clocking (SSC) parameters and modes (e.g., spread range and whether or not SSC is enabled). The operating clock frequencies (f₁, f₂, etc.) may be defined, or selected in any suitable manner, as will be discussed below.

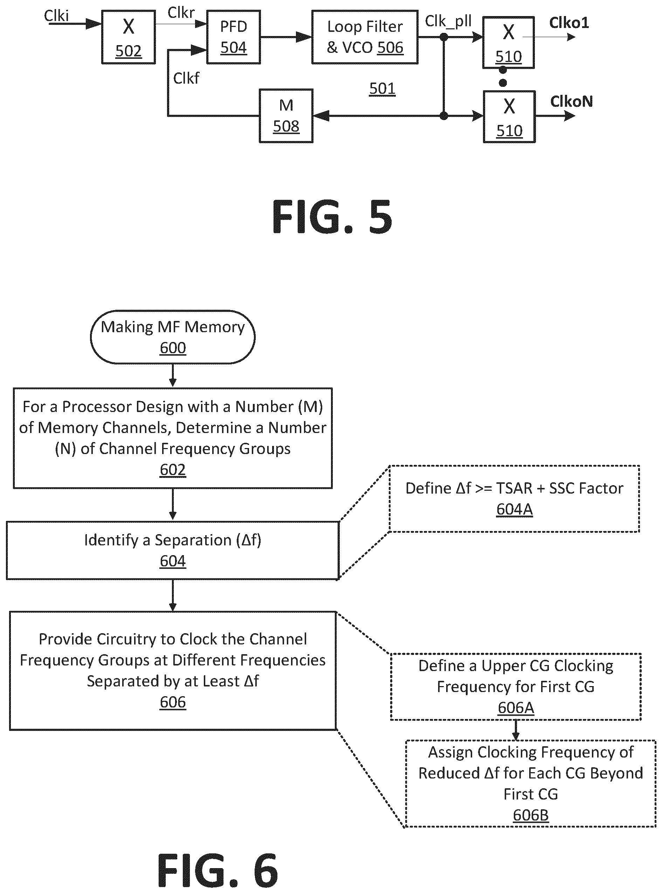

Fig. 5 is a diagram showing a clock generation circuit in accordance with some embodiments. With this example, the clock generation circuit is implemented with a PLL (phase locked loop), e.g., a digital or hybrid digital/analog PLL, along with additional clock buffer circuits that may incorporate PLLs, DLLs or other circuits to buffer and/or step up or down incoming clock signals. The depicted PLL 501 includes a front-end clock multiply/divide buffer 502, a phase-frequency detector (PFD) 504, a loop filter/VCO 506, and a feedback divider (e.g., counter in digital implementation) 508, coupled together as shown. It also includes downstream clock multiply/divide buffers for providing multiple clocks at different frequencies or the different channel frequency groups.

As used herein, a clock multiply/divide buffer (also referred to simply as clock buffer) may either step up, step down or simply buffer an incoming clock signal. It may be implemented with any suitable circuitry such as with amplifiers, PLLs, DLLs, clock synthesis circuitry, and/or any suitable combination of the same, depending on particular design objectives. For example, separate multiply/divide logic and/or PLLs or DLLS may be used for each clock buffer 510 to generate the separate channel group frequencies off of a common clock source such as PLL 501. In some embodiments, they may be programmable.

Depending on the utilized incoming clock (Clki), clock buffer 502 may either multiply, divide or simply buffer the input clock (Clki), providing a reference clock (Clkr) to PFD 504. The PFD 504 detects the differences in phase and frequency between the reference clock and a feedback clock (Clkf), controlling the charge pump (e.g., counter in VCO block) and loop filter, which converts the phase difference to a control signal for controlling the VCO. Based on the control signal, the VCO oscillates at a higher or lower frequency, generating a PLL output (Clk_pll), which affects the phase and frequency of the Feedback signal. After the reference clock and the feedback signal have the same phase and frequency, the PLL is said to be phase-locked.

The M divider 508 in the feedback path causes the VCO to oscillate at a frequency that is M times the frequency of the Clkr signal. In this way, the PLL can generate a frequency (Clk_pll) that is greater than the input reference clock frequency, which may be a stable and precise master reference clock that has a relatively low frequency (e.g., 100 MHz).

Fig. 6 is a flow diagram showing a routine 600 for making a multi frequency (MF) memory product in accordance with some embodiments. At 602, a number of channel groups (N) is determined based on design considerations and also on the number of memory channels (M) to be used. More frequency groups with smaller numbers of channels in each group may result in lower EMI but require more robust circuitry. On the other hand, if there are many channels (M), then a relatively large number (N) of channel groups (e.g., 4, 5 or more) may be appropriate.

At 604, a separation value (Δf) between channel group frequencies is identified (e.g., determined, calculated, defined). This separation should be far enough to provide sufficient EMI spread but not so far as to impair performance. In some embodiments, as shown at 604A, the operating clock frequencies between channels should be separated far enough to span defined EMI measurement test procedures. For example, some EMI requirements determine compliance by measuring various different frequencies with a 1 MHz resolution bandwidth. Therefore, the clock frequencies should be offset by at least 1 MHz with this test scenario. In addition, spread spectrum clocking should also be accounted for if it is being used. For example, with a fundamental clock frequency (fo) = 3200 MHz and an applied 0.5% SSC, there would be a 16 MHz band on each side of the fundamental frequency (fo). So, in order to stay out of neighboring bands and to avoid the 1 MHz testing resolution bandwidth on a spectrum analyzer, then for this example, a Δf = 17 MHz may be used. Since this frequency offset is relatively small, this should incur little impact on performance.

At 606, circuitry (such as circuitry discussed above) is provided to generate the channel group clock frequencies. In some embodiments, at 606A, an upper frequency may be defined as the first frequency (f₁). At 606B, the remaining channel group frequencies are progressively given lower frequencies separated by Δf. These groups are at a lower frequency than the max operating frequency (f₁) for the channel to have sufficient IO operating margins. By selecting the Δf to have a 1 MHz (or even larger, e.g., 17 M Hz. with SSC) value, overlap between channel groups can be avoided, while the gap can be small enough to minimize performance impacts. (Note that while the frequencies for each channel have been described as being reduced by the same Δf for operational convenience, non-uniform Δfs may also be implemented.)

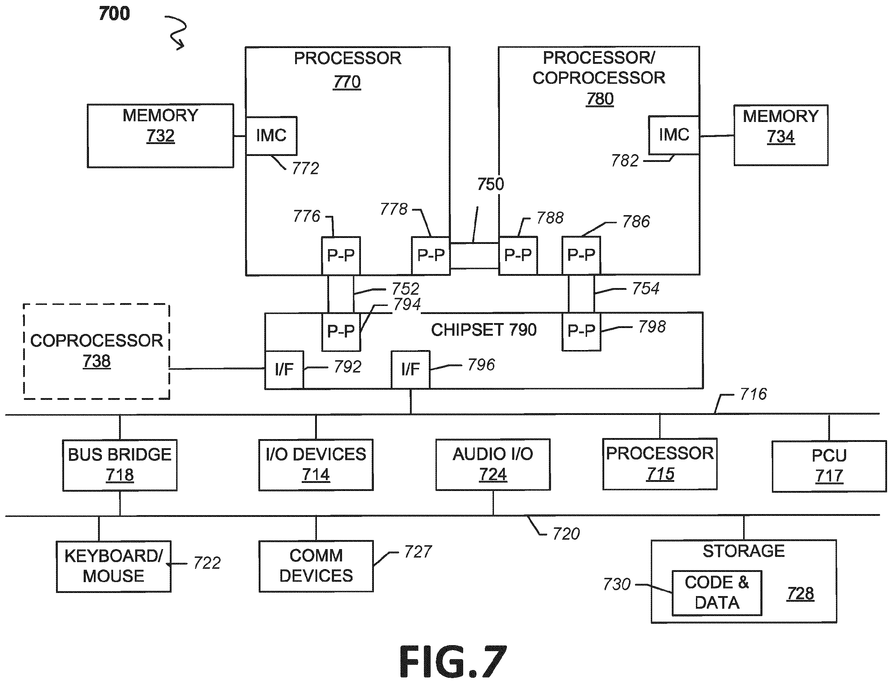

Fig. 7 illustrates an example computing system. Multiprocessor system 700 is an interfaced system and includes a plurality of processors including a first processor 770 and a second processor 780 coupled via an interface 750 such as a point-to-point (P-P) interconnect, a fabric, and/or bus. In some examples, the first processor 770 and the second processor 780 are homogeneous. In some examples, first processor 770 and the second processor 780 are heterogenous. Though the example system 700 is shown to have two processors, the system may have three or more processors, or may be a single processor system. In some examples, the computing system is implemented, wholly or partially, with a system on a chip (SoC) or a multichip (or multi-chiplet) module, in the same or in different package combinations.

Processors 770 and 780 are shown including integrated memory controller (IMC) circuitry 772 and 782, respectively, either or both of which may incorporate multi frequency memory channels as disclosed herein. Processor 770 also includes interface circuits 776 and 778, along with core sets. Similarly, second processor 780 includes interface circuits 786 and 788, along with a core set as well. A core set generally refers to one or more compute cores that may or may not be grouped into different clusters, hierarchal groups, or groups of common core types. Cores may be configured differently for performing different functions and/or instructions at different performance and/or power levels. The processors may also include other blocks such as memory and other processing unit engines.

Processors 770, 780 may exchange information via the interface 750 using interface circuits 778, 788. IMCs 772 and 782 couple the processors 770, 780 to respective memories, namely a memory 732 and a memory 734, which may be portions of main memory locally attached to the respective processors.

Processors 770, 780 may each exchange information with a network interface (NW I/F) 790 via individual interfaces 752, 754 using interface circuits 776, 794, 786, 798. The network interface 790 (e.g., one or more of an interconnect, bus, and/or fabric, and in some examples is a chipset) may optionally exchange information with a coprocessor 738 via an interface circuit 792. In some examples, the coprocessor 738 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 770, 780 or outside of both processors, yet connected with the processors via an interface such as P-P interconnect, such that either or both processors' local cache information may be stored in the shared cache if a processor is placed into a low power mode.

Network interface 790 may be coupled to a first interface 716 via interface circuit 796. In some examples, first interface 716 may be an interface such as a Peripheral Component Interconnect (PCI) interconnect, a PCI Express interconnect, or another I/O interconnect. In some examples, first interface 716 is coupled to a power control unit (PCU) 717, which may include circuitry, software, and/or firmware to perform power management operations with regard to the processors 770, 780 and/or co-processor 738. PCU 717 provides control information to one or more voltage regulators (not shown) to cause the voltage regulator(s) to generate the appropriate regulated voltage(s). PCU 717 also provides control information to control the operating voltage generated. In various examples, PCU 717 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 717 is illustrated as being present as logic separate from the processor 770 and/or processor 780. In other cases, PCU 717 may execute on a given one or more of cores (not shown) of processor 770 or 780. In some cases, PCU 717 may be implemented as a microcontroller (dedicated or general-purpose) or other control logic configured to execute its own dedicated power management code, sometimes referred to as P-code. In yet other examples, power management operations to be performed by PCU 717 may be implemented externally to a processor, such as by way of a separate power management integrated circuit (PMIC) or another component external to the processor. In yet other examples, power management operations to be performed by PCU 717 may be implemented within BIOS or other system software. Along these lines, power management may be performed in concert with other power control units implemented autonomously or semi-autonomously, e.g., as controllers or executing software in cores, clusters, IP blocks and/or in other parts of the overall system.

Various I/O devices 714 may be coupled to first interface 716, along with a bus bridge 718 which couples first interface 716 to a second interface 720. In some examples, one or more additional processor(s) 715, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 716. In some examples, second interface 720 may be a low pin count (LPC) interface. Various devices may be coupled to second interface 720 including, for example, a keyboard and/or mouse 722, communication devices 727 and storage circuitry 728. Storage circuitry 728 may be one or more non-transitory machine-readable storage media as described below, such as a disk drive or other mass storage device which may include instructions/code and data 730 and may implement the storage in some examples. Further, an audio I/O 724 may be coupled to second interface 720. Note that other architectures than the point-to-point architecture described above are possible. For example, instead of the point-to-point architecture, a system such as multiprocessor system 700 may implement a multi-drop interface or other such architecture.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

Illustrative examples of the technologies disclosed herein are provided below. An embodiment of the technologies may include any one or more, and any compatible combination of, the examples described below.

Example 1 is an apparatus that includes a clock generator circuit, a first memory channel circuit, and a second memory channel circuit. The clock generator circuit includes a first node to provide a first clock with a first clock frequency and a second node to provide a second clock with a second clock frequency. The first memory channel circuit is coupled to the first node. The second memory channel circuit is coupled to the second node, and the first clock frequency is different from the second clock frequency.

Example 2 includes the subject matter of example 1, and wherein the clock generator circuit and first and second memory channel circuits are part of a memory controller.

Example 3 includes the subject matter of any of examples 1-2, and wherein the memory controller is part of a processor package.

Example 4 includes the subject matter of any of examples 1-3, and wherein the first and second memory channel circuits implement double data rate (DDR) memory channels.

Example 5 includes the subject matter of any of examples 1-4, and wherein the first clock frequency is larger than the second clock frequency by at least 1 MHz.

Example 6 includes the subject matter of any of examples 1-5, and wherein the first and second clocks implement spread spectrum clocking.

Example 7 includes the subject matter of any of examples 1-6, and wherein the first memory channel circuit is part of a first channel group that includes at least one other memory channel circuit coupled to the first node to be driven using the first clock.

Example 8 includes the subject matter of any of examples 1-7, and comprising a third memory channel circuit coupled to a third node from the clock generator circuit to receive a third clock with a third clock frequency, wherein the first clock frequency, the second clock frequency. and the third clock frequency are each different from one another.

Example 9 includes the subject matter of any of examples 1-8, and wherein the first and second clock frequencies are separated by a first difference, and the second and third clock frequencies are separated by a second difference, wherein the first and second differences are equivalent.

Example 10 includes the subject matter of any of examples 1-9, and wherein the first and second clock frequencies are separated by a first difference, and the second and third clock frequencies are separated by a second difference, wherein the first and second differences are different from each other.

Example 11 is an apparatus that includes processor cores and at least one memory controller. The at least one memory controller is coupled to the processor cores. The at least one memory controller includes a first memory channel circuit coupled to a first clock node that is to provide a first clock with a first clock frequency to the first memory channel circuit. The at least one memory controller also includes a second memory channel circuit coupled to a second clock node that is to provide a second clock with a second clock frequency to the second memory channel circuit, wherein the first and second clock frequencies are different from one another.

Example 12 includes the subject matter of example 11, and wherein the memory controller and processor cores are on the same integrated circuit (IC) die.

Example 13 includes the subject matter of any of examples 11-12, and wherein the first and second memory channel circuits implement double data rate (DDR) memory channels.

Example 14 includes the subject matter of any of examples 11-13, and wherein the first clock frequency is larger than the second clock frequency by at least 1 MHz.

Example 15 includes the subject matter of any of examples 11-14, and wherein the first and second clocks implement spread spectrum clocking.

Example 16 includes the subject matter of any of examples 11-15, and wherein the first memory channel circuit is part of a first channel group that includes at least one other memory channel circuit coupled to the first node to be driven using the first clock.

Example 17 includes the subject matter of any of examples 11-16, and comprising a third memory channel circuit coupled to a third node from the clock generator circuit to receive a third clock with a third clock frequency, wherein the first clock frequency, the second clock frequency, and the third clock frequency are each different from one another.

Example 18 includes the subject matter of any of examples 11-17, and wherein the first and second clock frequencies are separated by a first difference, and the second and third clock frequencies are separated by a second difference, wherein the first and second differences are equivalent.

Example 19 includes the subject matter of any of examples 11-18, and wherein the first and second clock frequencies are separated by a first difference, and the second and third clock frequencies are separated by a second difference, wherein the first and second differences are different from each other.

Example 20 includes the subject matter of any of examples 11-19, and wherein the processor cores are graphics processing cores that are coupled to the memory controller through a system fabric.

Example 21 is a method for making a processor. The method includes, for a processor design with a first number of memory channels, determining a second number of channel frequency groups with each group having a unique operating frequency. The method also includes identifying a frequency separation value for the unique frequencies of first and second groups of the second number of channel frequency groups. The method also includes providing circuitry to clock the first and second channel groups at their unique operating frequencies separated by at least the frequency separation value.

Example 22 includes the subject matter of example 21, and wherein the frequency separation value is larger than 1 MHz.

Example 23 includes the subject matter of any of examples 21-22, and wherein the frequency separation value is larger than 50% of a spread spectrum clocking range that is used for the first and second channel frequency groups.

Example 24 includes the subject matter of any of examples 21-23, and wherein the unique operating frequency for the first channel frequency group is larger than the unique operating frequency for the second channel frequency group.

Example 25 includes the subject matter of any of examples 21-24, and wherein the channel groups are arranged in a sequence from the first channel group to an Nth channel group, with each channel group having an associated operating frequency that is greater than an operating frequency of a next channel group in the sequence by at least the frequency separation value.

Reference in the specification to "an embodiment," "one embodiment," "some embodiments," or "other embodiments" means that a particular feature, structure, or characteristic described in connection with the embodiments is included in at least some embodiments, but not necessarily all embodiments. The various appearances of "an embodiment," "one embodiment," or "some embodiments" are not necessarily all referring to the same embodiments. If the specification states a component, feature, structure, or characteristic "may," "might," or "could" be included, that particular component, feature, structure, or characteristic is not required to be included.

Throughout the specification, and in the claims, the term "connected" means a direct connection, such as electrical, mechanical, or magnetic connection between the things that are connected, without any intermediary devices.

The term "coupled" means a direct or indirect connection, such as a direct electrical, mechanical, or magnetic connection between the things that are connected or an indirect connection, through one or more passive or active intermediary devices.

The term "circuit" or "module" may refer to one or more passive and/or active components that are arranged to cooperate with one another to provide a desired function. It should be appreciated that different circuits or modules may consist of separate components, they may include both distinct and shared components, or they may consist of the same components. For example, A controller circuit may be a first circuit for performing a first function, and at the same time, it may be a second controller circuit for performing a second function, related or not related to the first function.

The meaning of "in" includes "in" and "on" unless expressly distinguished for a specific description.

The terms "substantially," "close," "approximately," "near," and "about," unless otherwise indicated, generally refer to being within +/-10% of a target value.

Unless otherwise specified, the use of the ordinal adjectives "first," "second," and "third," etc., to describe a common object, merely indicate that different instances of like objects are being referred to and are not intended to imply that the objects so described must be in a given sequence, either temporally, spatially, in ranking or in any other manner.

For the purposes of the present disclosure, phrases "A and/or B" and "A or B" mean (A), (B), or (A and B). For the purposes of the present disclosure, the phrase "A, B, and/or C" means (A), (B), (C), (A and B), (A and C), (B and C), or (A, B and C).

It is pointed out that those elements of the figures having the same reference numbers (or names) as the elements of any other figure can operate or function in any manner similar to that described but are not limited to such.

In addition, well-known power/ground connections to integrated circuit (IC) chips and other components may or may not be shown within the presented figures, for simplicity of illustration and discussion, and so as not to obscure the disclosure. Further, arrangements may be shown in block diagram form in order to avoid obscuring the disclosure, and also in view of the fact that specifics with respect to implementation of such block diagram arrangements are dependent Note that in the corresponding drawings of the embodiments, signals are represented with lines. Some lines may be thicker, to indicate a greater number of constituent signal paths, and/or have arrows at one or more ends, to indicate a direction of information flow. Such indications are not intended to be limiting. Rather, the lines are used in connection with one or more exemplary embodiments to facilitate easier understanding of a circuit or a logical unit. Any represented signal, as dictated by design needs or preferences, may actually comprise one or more signals that may travel in either direction and may be implemented with any suitable type of signal scheme upon the platform within which the present disclosure is to be implemented.

As defined herein, the term "computer readable storage medium" means a storage medium that contains or stores program code for use by or in connection with an instruction execution system, apparatus, or device. As defined herein, a "computer readable storage medium" is not a transitory, propagating signal per se. A computer readable storage medium may be, but is not limited to, an electronic storage device, a magnetic storage device, an optical storage device, an electromagnetic storage device, a semiconductor storage device, or any suitable combination of the foregoing. Memory elements, as described herein, are examples of a computer readable storage medium.

As defined herein, the term "if" means "when" or "upon" or "in response to" or "responsive to," depending upon the context. Thus, the phrase "if it is determined" or "if [a stated condition or event] is detected" may be construed to mean "upon determining" or "in response to determining" or "upon detecting [the stated condition or event]" or "in response to detecting [the stated condition or event]" or "responsive to detecting [the stated condition or event]" depending on the context. As defined herein, the term "responsive to" means responding or reacting readily to an action or event. Thus, if a second action is performed "responsive to" a first action, there is a causal relationship between an occurrence of the first action and an occurrence of the second action. The term "responsive to" indicates the causal relationship.

While the flow diagrams in the figures show a particular order of operations performed by certain embodiments of the invention, it should be understood that such order is exemplary (e.g., alternative embodiments may perform the operations in a different order, combine certain operations, overlap certain operations, etc.).

While the invention has been described in terms of several embodiments, those skilled in the art will recognize that the invention is not limited to the embodiments described, can be practiced with modification and alteration within the spirit and scope of the appended claims. The description is thus to be regarded as illustrative instead of limiting.

## Claims

1. An apparatus, comprising:
a clock generator circuit including a first node to provide a first clock with a first clock frequency and a second node to provide a second clock with a second clock frequency;
a first memory channel circuit coupled to the first node; and
a second memory channel circuit coupled to the second node, wherein the first clock frequency is different from the second clock frequency.

2. The apparatus of claim 1,
wherein the clock generator circuit and first and second memory channel circuits are part of a memory controller.

3. The apparatus of claim 2,
wherein the memory controller is part of a processor package.

4. The apparatus of any of claims 1-3,
wherein the first and second memory channel circuits implement double data rate (DDR) memory channels.

5. The apparatus of any of claims 1-4,
wherein the first clock frequency is larger than the second clock frequency by at least 1 MHz.

6. The apparatus of any of claims 1-5,
wherein the first and second clocks implement spread spectrum clocking.

7. The apparatus of any of claims 1-6,
wherein the first memory channel circuit is part of a first channel group that includes at least one other memory channel circuit coupled to the first node to be driven using the first clock.

8. The apparatus of any of claims 1-7, comprising
a third memory channel circuit coupled to a third node from the clock generator circuit to receive a third clock with a third clock frequency, wherein the first clock frequency, the second clock frequency. and the third clock frequency are each different from one another.

9. The apparatus of claim 8,
wherein the first and second clock frequencies are separated by a first difference, and the second and third clock frequencies are separated by a second difference, wherein the first and second differences are equivalent.

10. The apparatus of claim 8,
wherein the first and second clock frequencies are separated by a first difference, and the second and third clock frequencies are separated by a second difference, wherein the first and second differences are different from each other.

11. A method for making a processor, comprising:
for a processor design with a first number of memory channels, determining a second number of channel frequency groups, wherein each group has a unique operating frequency;
identifying a frequency separation value for the unique frequencies of first and second groups of the second number of channel frequency groups; and
providing circuitry to clock the first and second channel groups at their unique operating frequencies separated by at least the frequency separation value.

12. The method of claim 11,
wherein the frequency separation value is larger than 1 MHz.

13. The method of claim 12,
wherein the frequency separation value is larger than 50% of a spread spectrum clocking range that is used for the first and second channel frequency groups.

14. The method of any of claims 11-13,
wherein the unique operating frequency for the first channel frequency group is larger than the unique operating frequency for the second channel frequency group.

15. The method of any of claims 11-14,
wherein the channel groups are arranged in a sequence from the first channel group to an Nth channel group, with each channel group having an associated operating frequency that is greater than an operating frequency of a next channel group in the sequence by at least the frequency separation value.
